Europäisches Patentamt

European Patent Office

Office européen des brevets

(19)

(11) Publication number: **0 117 997**
**A1**

# EUROPEAN PATENT APPLICATION

(12)

(21) Application number: **84100682.8**

(22) Date of filing: **24.07.81**

(51) Int. Cl.³: **C 08 B 37/16**
**C 12 P 19/18**

(30) Priority: **24.07.80 JP 101562/80**
**31.07.80 JP 104383/80**
**06.03.81 JP 31259/81**

(43) Date of publication of application:
**12.09.84 Bulletin 84/37**

(84) Designated Contracting States:
**BE DE FR GB NL**

(60) Publication number of the earlier application
in accordance with Art. 76 EPC: **0 045 464**

(71) Applicant: **RIKAGAKU KENKYUSHO**
**2-1 Hirosawa**
**Wako-shi Saitama-ken(JP)**

(71) Applicant: **Nihon Shokuhin Kako Co., Ltd.**
**No. 4-1, 3-chome, Marunouchi**
**Chiyoda-ku Tokyo(JP)**

(72) Inventor: **Horikoshi, Koki**
**No. 4-39-8 Sakuradai Nerima-ku**
**Tokyo(JP)**

(72) Inventor: **Yamamoto, Mikio**
**No. 1482 Hamazaki**
**Asaka-shi Saitama-ken(JP)**

(72) Inventor: **Nakamura, Nobuyuki**
**No. 1-6-16 Naka**
**Kunitachi-shi Tokyo(JP)**

(72) Inventor: **Okada, Minoru**
**No. 2-1-6 Fuyodai**
**Mishima-shi Shizuoka-ken(JP)**

(72) Inventor: **Matsuzawa, Masamitsu**
**No. 2954 Imaizumi**
**Fuji-shi Shizuoka-ken(JP)**

(72) Inventor: **Ueshima, Osamu**
**No. 47-14 Kamo**
**Mishima-shi Shizuoka-ken(JP)**

(72) Inventor: **Nakakuki, Teruo**
**No. 22-15 Higashiarai Yatabe-cho**
**Tsukuba-gun Ibaragi-ken(JP)**

(74) Representative: **Vossius Vossius Tauchner Heunemann Rauh**
**Siebertstrasse 4 P.O. Box 86 07 67**
**D-8000 München 86(DE)**

(54) **Process for producing cyclodextrins.**

(57) This invention relates to a process for producing cyclodextrins without using any organic solvents i.e. by non-solvent process. According to this invention, a sugar solution containing cyclodextrins and reducing sugars as primary ingredients is brought into contact with (i) a hydrophobic, synthetic adsorption resin comprising a porous polymer, (ii) a strongly acidic cation exchange resin or (iii) a strongly acidic cation exchange resin followed by gel resin particles, to thereby isolate α, β- or γ-cyclodextrins or a mixture thereof from the sugar solution.

EP 0 117 997 A1

Our Ref.: R 340/I EP    Case: OP 81041-01

RIKAGAKU KENKYUSHO, Wako, Japan & NIHON SHOKUHIN KAKO Co., LTD.,Tokyo,Japan

" Process for Producing Cyclodextrins "    **0117997**

## BACKGROUND OF THE INVENTION:

VOSSIUS · VOSSIUS · TAUCHI
HEUNEMANN · RAUH
PATENTANWALTE
SIEBERTSTR. 4, 8000 MUNCHEN
TEL. (089) 47 4076

### Field of the Invention:

This invention relates to a process for producing a cyclodextrin or a mixture of cyclodextrins and more particularly, to a process for recovering a cyclodextrin or a mixture of different cyclodextrins; especially, $\alpha$-, $\beta$- and $\gamma$-cyclodextrins from a sugar solution containing cyclodextrins and reducing sugars without using any organic solvents i.e. by non-solvent process. According to this invention, the sugar solution containing cyclodextrins and reducing sugars as primary ingredients is brought into contact with (i) a hydrophobic, synthetic adsorption resin comprising a porous polymer, (ii) a strongly acidic cation exchange resin or (iii) a strongly acidic cation exchange resin followed by gel resin particles, to thereby isolate $\alpha$-, $\beta$- or $\gamma$-cyclodextrins or a mixture thereof from the solution.

### Description of the Prior Art:

Cyclodextrins are non-reducing dextrins which have a ring structure wherein glucose units are joined to one another by $\alpha$-1,4-glucosidic linkages. Generally, $\alpha$-cyclodextrin, $\beta$-cyclodextrin and $\gamma$-cyclodextrin, which consists of 6, 7 and 8 glucose units, respectively, are well known. The cyclodextrin molecule includes various kinds of organic compounds into the cavity of the ring structure which is in a hydrophobic atmosphere to form an inclusion compound. Alpha-, beta- and gamma-cyclodextrins have many different physical properties from one another: the molecular weights ( $\alpha = 973$, $\beta = 1135$ and $\gamma = 1297$), the cavity diameters of ring structure ($\alpha = 5 - 6$ Å, $\beta = 7 - 8$ Å and $\gamma = 9 - 10$ Å) and water solubility (at $25^\circ$C, g/100 ml·$H_2O$ : $\alpha = 14.5$, $\beta = 1.85$ and $\gamma = 23.2$).

Accordingly, cyclodextrins find wide use in medicines, agricultural chemicals, cosmetics and foods and new applications thereof are expected to be found. Only a mixture of $\alpha$-, $\beta$- and $\gamma$-cyclodextrins and starch hydrolyzate containing acyclic dextrins and $\beta$-cyclodextrins precipitated and separated from such mixture, are products which can be produced, at present, at relatively low cost. Alpha-cyclodextrin and $\gamma$-cyclodextrin can not be produced at low cost. The industrial production of $\alpha$- and $\gamma$-cyclodextrins is deemed difficult, although they have special properties and their specific applications are expected as described above. This is due to the difference of water solubility of $\alpha$-, $\beta$- and $\gamma$-cyclodextrins. Namely, the water-solubility of $\beta$-cyclodextrin is very low compared with $\alpha$- and $\gamma$-cyclodextrins and therefore, it is easily precipitated and separated from the starch hydrolyzate solution containing cyclodextrins. On the contrary, $\alpha$- and $\gamma$-cyclodextrins have relatively high water solubilities and so, it is difficult without using any organic solvents to separate these cyclodextrins as crystal from the starch hydrolyzate solution containing cyclodextrins.

0117997

There are many proposed processes for producing cyclodextrins hereinbefore. One typical process is such that liquefied starch products are reacted with cyclodextrin glycosyltransferase, hereinafter refer to "CGTase", to obtain starch hydrolyzate solution containing cyclodextrins followed by adding an organic solvent such as trichloroethylene, tetrachloroethane or bromobenzene to precipitate cyclodextrins as a complex and to separate cyclodextrins from the starch hydrolyzate.

An improved process of the typical one mentioned above has been proposed, which comprises reacting the starch hydrolyzate containing cyclodextrins with glucoamylase in order to hydrolyse acyclic dextrins to convert them into glucose and then adding an organic solvent to the resulting sugar solution containing cyclodextrins and glucose to precipitate only cyclodextrins (see DENPUN-KAGAKU (Starch Science) 22, pp. 6-10 (1975); Japanese Patent No. 1,034,493).

However, organic solvents are used to precipitate cyclodextrins in all the aforementioned processes and contaminate the cyclodextrins thus obtained so that they cannot be utilized in the production of medicines or foods due to the toxicity of the solvents and the production cost should have been high.

Some processes for producing cyclodextrins without using any organic solvents, that is, non-solvent processes have recently been discussed and proposed.

There are proposed two non-solvent processes, that is, the one comprising reacting liquefied starch with a new CGTase having an optimum pH on the alkaline side instead of known CGTases, concentrating the reaction mixture and adding a small amount of cyclodextrin as a seed crystal to precipitate cyclodextrins (see Japanese Patent No. 914,137) and the other comprising contacting a solution containing cyclodextrins and reducing sugars with OH type of anion exchange resin to adsorb only reducing sugars on the resin to thereby separate cyclodextrins from the reducing sugars (See Japanese Patent Disclosure No. 136,889/1976).

These non-solvent processes are advantageous since cyclodextrins obtained by the processes have no toxicity of the solvents so that they can widely be used in the field of medicines or foods. However, these processes have some disadvantages: the former process requires complicated operations and the latter process wherein OH type of anion exchange resin is used is not sufficient to effectively and continuously produce cyclodextrins because elution rate of reducing sugars adsorbed on the resin is too low and, if HCl is used to increase the elution rate, a regeneration of the resin after HCl elution is required and further, a temperature of liquid passing through the column packed with the resin should be controlled below 20°C in order to prevent reducing sugars adsorbed from decomposing. In addition, the aforementioned non-solvent processes are those for producing β-cyclodextrin or a mixture
of α-, β- and γ-cyclodextrins but are not those for
selectively separating α-cyclodextrin or γ-cyclodextrin.

As stated above, cyclodextrins (in particular,
α-cyclodextrin or γ-cyclodextrin) which have special
molecular structure and properties and from which possible utilization in a wide field is expected may extremely be useful in view of an industrial and an
economic points, if α-cyclodextrin and γ-cyclodextrin
could be produced advantageously without using any
organic solvents.


SUMMARY OF THE INVENTION:

Accordingly, an object of this invention is to
provide a process for producing cyclodextrins by non-
solvent process at high efficiency.

Another object of this invention is to provide
a process for producing α-cyclodextrin by non-solvent
process.

Further object of this invention is to provide
a process for producing γ-cyclodextrin by non-solvent
process.

The inventors have studied the matter to accomplish the abovementioned objects and now found that
only γ-cyclodextrin is selectively and efficiently obtained by a process comprising bringing a sugar solution
containing cyclodextrins and reducing sugars as primary ingredients into contact with a synthetic adsorption resin comprising a porous polymer to adsorb $\gamma$-cyclodextrin or $\beta$- and $\gamma$-cyclodextrins, and then eluting the adsorbed cyclodextrin(s) with water, wherein the column temperature during the adsorption and the elution is controlled.

The inventors have further studied the matter to accomplish the objects and found that cyclodextrins is efficiently separated from reducing sugars and is continuously produced by a process comprising passing a sugar solution containing cyclodextrins and reducing sugars as primary ingredients through a column packed with alkali or alkali earth metal salts of strongly acidic cation exchange resin and further, that only $\alpha$-cyclodextrin is selectively and efficiently produced by the same process except that the sugar solution is reacted with a specific saccharogenic enzyme prior to passing the solution through the column to hydrolyze cyclodextrins except for $\alpha$-cyclodextrin into reducing sugars.

The inventors have found further that $\gamma$-cyclodextrin is efficiently and economically produced by a process comprising passing a sugar solution containing cyclodextrins and reducing sugars as primary ingredients through a column packed with the salts of strongly acidic cation exchange resin after which subjecting the resulting cyclodextrins fraction to a gel filtration.

This invention has been completed under the

- 6 -

discoveries mentioned above.

According to the first embodiment of the present invention, there is provided a process for producing $\gamma$-cyclodextrin comprising: bringing a sugar solution containing cyclodextrins into contact with a hydrophobic, synthetic adsorption resin comprising a porous polymer and having a selective adsorptivity to cyclodextrins, to selectively adsorb only $\gamma$-cyclodextrin and then, eluting the adsorbed $\gamma$-cyclodextrin with water.

According to the second embodiment of the present invention, there is provided a process for producing $\gamma$-cyclodextrin comprising: bringing a sugar solution containing cyclodextrins into contact with a hydrophobic, synthetic adsorption resin comprising a porous polymer and having a selective adsorptivity to cyclodextrins, to selectively adsorb only $\beta$-cyclodextrin and $\gamma$-cyclodextrin, eluting the adsorbed $\beta$-cyclodextrin and then eluting the adsorbed $\gamma$-cyclodextrin with water.

According to the third embodiment of the present invention, there is provided a process for producing cyclodextrins comprising: passing a sugar solution containing cyclodextrins and reducing sugars as primary ingredients through a column packed with alkali or alkali earth metal salts of strongly acidic cation exchange resin to separate and collect cyclodextrins from reducing sugars.

According to the fourth embodiment of the present invention, there is provided a process for producing

0117997

α-cyclodextrin comprising:  passing a sugar solution containing α-cyclodextrin and reducing sugars as primary ingredients through a column packed with alkali or alkali earth metal salts of strongly acidic cation exchange resin to separate and collect α-cyclodextrin from reducing sugars.

A separation mechanism of cyclodextrins or α-cyclodextrin from reducing sugar according to the third and the fourth embodiments of the present invention is different from that of a conventional adsorption chromatography using OH type of anion exchange resin. In the adsorption chromatography, reducing sugars are strongly adsorbed on exchange radical of anion resin.  On the other hand, the separation process of the present invention is a kind of gel chromatography depending upon the difference between molecular weights of cyclodextrins and reducing sugars.

According to the fifth embodiment of the present invention, there is provided a process for producing γ-cyclodextrin comprising steps of:  the first step comprising reacting gelatinized or liquefied starch with cyclodextrin glycosyltransferase to obtain starch hydrolyzate containing cyclodextrins and reacting said starch hydrolyzate containing cyclodextrins with glucoamylase having poor if any α-amylase activity to prepare a sugar solution containing glucose and α, β- and γ-cyclodextrins as primary ingredients;

the second step comprising passing the sugar solution through a column packed with alkali or alkali earth metal salts of strongly acidic cation exchange resin to separate α-, β- and γ-cyclodextrins fraction from glucose fraction, and;

the third step comprising passing the α-, β- and γ-cyclodextrins fraction through a column packed with gel resin particles to separate γ-cyclodextrin.

BRIEF DESCRIPTION OF THE DRAWING:

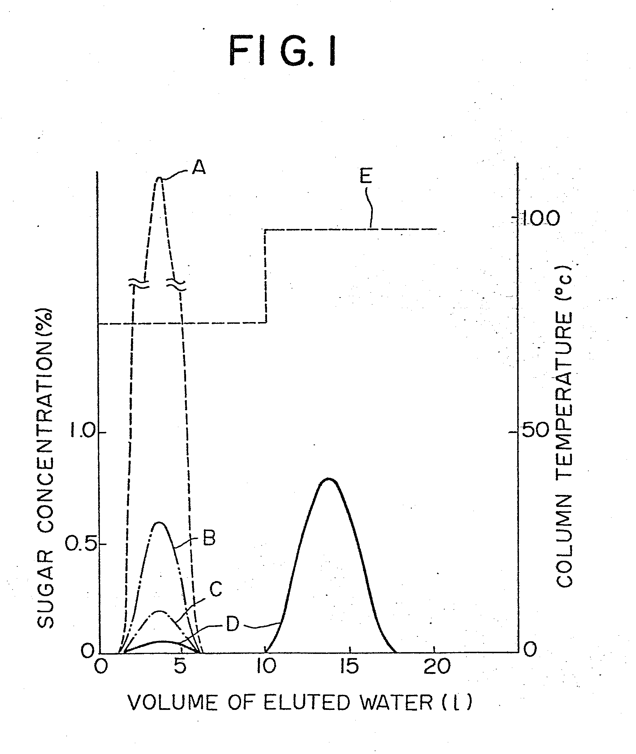

Figure 1 shows an elution pattern according to the first embodiment of the present invention;

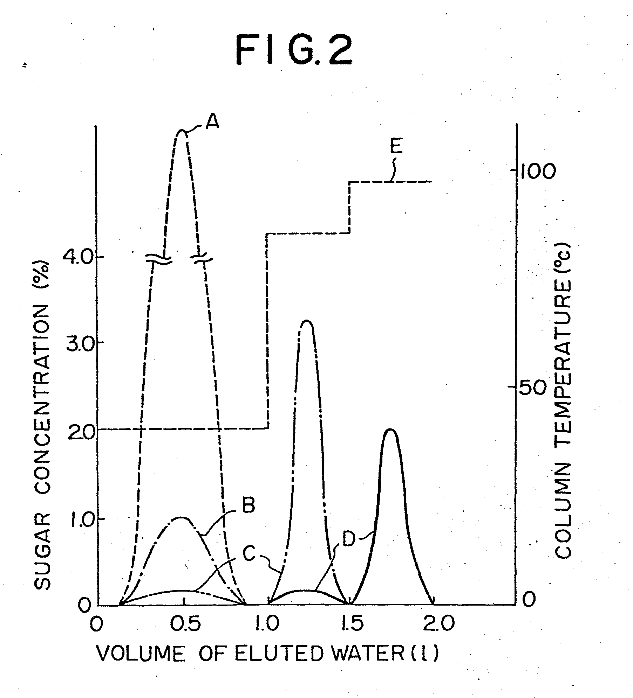

Figure 2 shows an elution pattern according to the second embodiment of the present invention. In Figures 1 and 2, A, B, C and D show concentration of eluted reducing sugars, α-cyclodextrin, β-cyclodextrin and γ-cyclodextrin in each fraction, respectively, and E shows a column temperature;

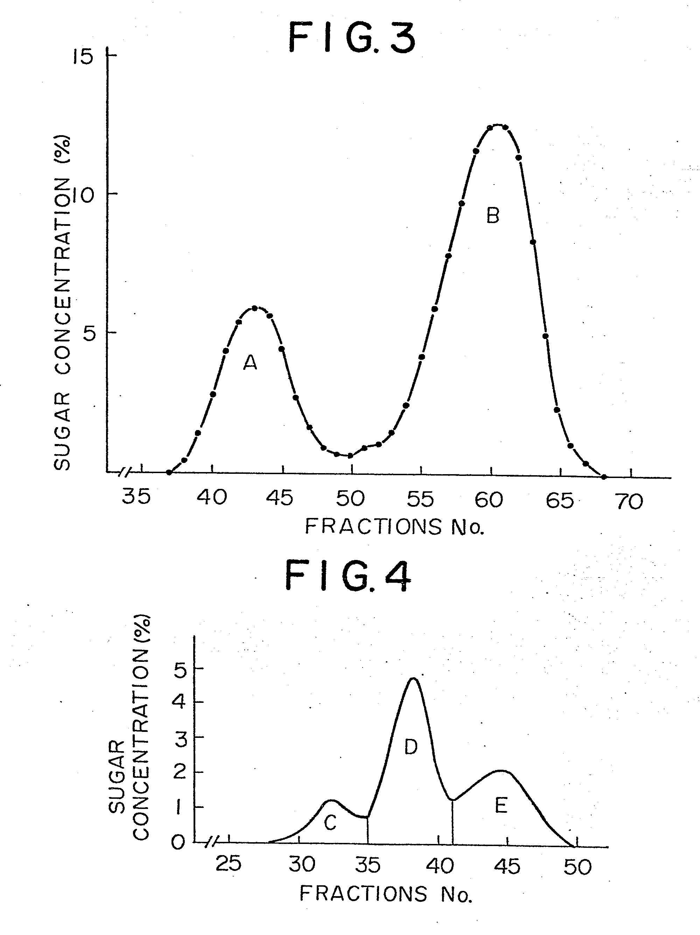

Figure 3 shows an elution pattern according to the third embodiment or the second step of the fifth embodiment of the present invention, which was obtained when the sugar solution containing α-, β- and γ-cyclodextrins and glucose as primary ingredients prepared in the first step of the fifth embodiment, was fed to the column packed with strongly acidic cation exchange resin after which it was eluted with water at 60°C;

Figure 4 shows an elution pattern according to the third step of the fifth embodiment of the present invention, which was obtained when the cyclodextrins fraction prepared in the second step of the fifth embodiment was fed to the column packed with gel resin particles after which it was eluted with water at 60°C. In Figures 3 and 4, A, B, C, D and E represent fractions of cyclodextrins, glucose, oligo saccharides, $\Gamma$-cyclodextrin and a mixture of $\alpha$- and $\beta$-cyclodextrins, respectively.

## DESCRIPTION OF THE PREFERRED EMBODIMENTS:

The process of the present invention will now be described in detail.

Firstly, the first and the second embodiments of the present invention will be described.

According to the first and the second embodiments of the present invention, when starch hydrolyzate solution containing cyclodextrins is brought into contact with a specific synthetic adsorption resin, only cyclodextrins are adsorbed and the starch hydrolyzate other than cyclodextrins are not adsorbed at all. If some specific resin is used, $\alpha$-cyclodextrin is not adsorbed and further if a column temperature at which the starch hydrolyzates solution containing cyclodextrins is fed to the column is suitably selected, $\beta$-cyclodextrin is not adsorbed, either and thus, only $\beta$- and $\Gamma$-cyclodextrins or only $\Gamma$-cyclodextrin may be selectively adsorbed. When $\beta$- and $\Gamma$-cyclodextrin are adsorbed, they can be efficiently separated from each other by continuously or stepwisely changing the column tempe-

0117997

rature while eluting. Thus, high pure γ -cyclodextrin can be efficiently obtained in a high yield.

Starting materials employed in the process of the first and the second embodiments include a starch hydrolyzate containing cyclodextrins and a sugar solution containing γ-cyclodextrin obtained by removing a smaller or greater part of α- or β-cyclo-dextrins from the starch hydrolyzate, which are pre-pared by reacting starch such as potato starch and corn starch gelatinized or liquefied by a conventional process, with a known cyclodextrin glycosyltransferase produced by a microorganism such as Bacillus macerans (IFO-3490, IAM-1227), Bacillus circulans (ATCC 61, ATCC 9966) and alkalophilic bacteria, for example, Bacillus sp. No. 38-2 ( ATCC-21783 ).

In the first and the second embodiments, the viscosity of the hydrolyzate or the sugar solution containing cyclodextrins to be brought into contact with the resin is preferably reduced to facilitate the operation and the washing of the resin packed column so that straight or branched chain dextrins other than cyclodextrins is preferably converted into reducing sugars by reacting the dextrins with a saccharogenic enzyme having poor, if any, hydrolytic action on cyclodextrins. The saccharogenic enzyme includes β-amylase and glucoamylase having poor, if any, α-amylase activity.

The sugar solution thus obtained by action of the saccharogenic enzyme and containing mainly cyclodextrin(s) and reducing sugars is brought into contact with the synthetic adsorption resin. For example, the solution may be continuously passed through the resin packed column from the top to the bottom or in contrast with this. By contact with the resin, $\beta$- and $\gamma$-cyclo-dextrins or if desired only $\gamma$-cyclodextrin contained in the sugar solution are selectively and completely adsorbed on the resin. On the other hand, $\alpha$-cyclo-dextrin, reducing sugars and unhydrolyzed dextrins (and if desired $\beta$-cyclodextrin) contained in the sugar solution are not adsorbed at all and flow out of the column quantitatively. Cyclodextrins to be adsorbed or eluted can be selected by changing the synthetic adsorption resin and the temperature at which adsorption or elution are effected.

The synthetic adsorption resin employed in the processes of the first and the second embodiments of the present invention is a synthetic adsorbent having a huge net structure. The porous polymer adsorption resin may be in the form of sphere or plate or in the amorphous form. Examples of hydrophobic organic porous resins which may be used include, styrene-divinylbenzene copolymer, ethylene-vinylbenzene copolymer, fluoroplastics, silicone resins and polyolefinic resins. Styrene-divinylbenzene copolymer has been found to be particularly useful.

Styrene-divinylbenzene copolymer having a large

0117997

number of micropores can be obtained in spherical form by suspending and polymerizing styrene and divinylbenzene (crosslinking agent) in water. Porous styrene-divinylbenzene copolymer having more than about 100 $m^2$/g of specific surface is particularly suitable for use in the process of the first and the second embodiments of the present invention.

Such a copolymer has a very low polarity, a large internal surface, and the property that water vapour can be adsorbed but that liquid water cannot enter the pores.

In general, when carrying out the process of the first and the second embodiments of the present invention, the composition of the resin used and the specific surface thereof have no particular limitation. Generally, any polymer having less than about 1,000 $m^2$/g of specific surface may be used. The porosity of the polymer is preferably in the range of from 35 to 95%, more preferably 40% to 90%. A porosity of less than 35% results in a decrease in surface and a increase in weight, while a porosity of more than 95% results in deformation of the polymer particles when charging a column, leading eventually to an increase in water pressure loss.

It is also possible to use a polymer in the form of a hydrophobic derivative as a result of treatment with for example, a silane. The pore size of the copolymer has an important influence on the surface area of the adsorbent. It is generally necessary to have apertures of a sufficient and proper size to enable the cyclodextrins to migrate therethrough to the adsorption surface and then be adsorbed.

There is an inversely proportional relationship between surface area and pore size. The smaller the pore size of the adsorbent, the larger is the surface area. Therefore, considering the molecular weights ($\alpha$: 973, $\beta$: 1135, $\gamma$:1297) and sizes of cyclodextrins, an adsorbent having about from 100 to 1,000 m$^2$/g of specific surface and suitable outward shape is preferably used.

Porous styrene-divinylbenzene copolymer adsorbents having properties as described above include, for example, AMBERLITE XAD-2 and -4(Rohm & Haas Co. USA.), DIAION-HP (Mitsubishi Chemical Ind. Ltd., JAPAN) and PORAPAK - N, -P, -Q, -R and PORAPAK-QS (Waters Associates, Inc. USA.). Amberlite, Diaion and Porapak are Trade Marks of the indicated companies.

The sequence in which cyclodextrins are eluted and the temperature at which each of cyclodextrins is eluted depend on the properties of the adsorption resin used. For example, DIAION-HP 20 does not adsorb $\alpha$-cyclodextrin at all and in the range of 0°C to 80°C, it adsorbs $\beta$-cyclodextrin at lower temperature but it does not adsorb $\beta$-cyclodextrin with increase in temperature. On the other hand, $\gamma$-cyclodextrin is completely adsorbed on the resin at a temperature within this range.

Namely, only γ-cyclodextrin is selectively adsorbed in the range of temperature of about 70°C to about 80°C. The temperature at which adsorption is effected is kept higher than that at which β-cyclodextrin is not substantially adsorbed and lower than that at which γ-cyclodextrin is not substantially eluted (at which β-cyclodextrin is eluted) in order to adsorb only γ-cyclodextrin (see Figure 1) in the process of the first embodiment of the present invention. The temperature at which adsorption is effected is kept lower than that at which most of β-cyclodextrin is adsorbed in order to adsorb both β- and γ-cyclodextrins and then the first elution is effected at an elevated temperature sufficient to elute β-cyclodextrin with, if any, a small amount of γ-cyclodextrin after which the second elution is effected at a further elevated temperature sufficient to elute γ-cyclodextrin to obtain pure γ-cyclodextrin (see Figure 2). Either of the two processes described above may be selected to adapt the object thereof. The former process is simple and advantageous to obtain only γ-cyclodextrin from the sugar solution which contains relatively a great amount of γ-cyclodextrin and, the latter one is advantageous to obtain γ-cyclodextrin as by product by separating β- and γ-cyclodextrin from the sugar solution which contains relatively a great amount of α-cyclodextrin.

As described above, cyclodextrins are eluted and separated with water while being heated in the process of the first and the second embodiments of the present invention. In general, substances adsorbed on an adsorbent are eluted and separated with some suitable organic solvents, bases or acids having an interaction with the surface of the adsorbent. On the contrary, adsorbed cyclodextrins can be easily and suitably eluted with hot water or water vapor without using such eluants as organic solvents in the processes of the first and the second embodiments.

It is preferred to saturate the synthetic adsorption resin with cyclodextrins only which can be adsorbed on the resin before the eluation in order to perform high productivity per the resin weight.

The flow rate of the sugar solution fed into the column is intimately related to the diffusion rate of cyclodextrin toward the inside of the adsorption resin particles within the column and the lower the flow rate, the more is the advantage. In general, a space velocity (SV) may be in practice kept at about 1, preferably about 0.5.

An amount of cyclodextrins adsorbed on the resin is almost never related to a cyclodextrins concentration in the sugar solution but is proportional to the absolute amount of cyclodextrins contained.

A concentration of the cyclodextrin-containing sugar solution to be passed through the column is preferably less than 30% by weight due to the low specific gravity of the porous adsorption resin. However, if any means are provided to prevent the resin from floating and if channeling does not occur, the concentration of the sugar solution has no limitation theoretically.

As mentioned above, according to the processes of the first and the second embodiments of the present invention, each of α-, β- and γ-cyclodextrins, especially γ-cyclodextrin can be separated and recovered from the starch hydrolyzate containing cyclodextrins prepared by reacting gelatinized or liquefied starch with CGT ase without using any organic solvents as employed in hitherto processes. These processes of the present invention can continuously be performed with a high efficiency to produce cyclodextrins, particularly γ-cyclodextrin.

Next, the third and the fourth embodiments of the present invention will now be described.

A sugar solution containing cyclodextrins and reducing sugars such as glucose and maltose as primary ingredients is employed as starting material in the processes of the third and the fourth embodiments and may be prepared by the process similar to the first and the second embodiments as mentioned above. For example, Starch hydrolyzate containing cyclodextrins may be prepared by reacting CGTase with a gelatinized starch solution prepared by heating a suspension containing 2 to 40% of starch with stirring, or with a liquefied starch solution prepared by adding a liquefying enzyme such as α-amylase to the starch suspension and heating the mixture. Examples of starch material include corn, wheat, potato and tapioca starches and grain flour containing such starches. CGTase used includes known enzymes obtained from Bacillus sp. · such as <u>Bacillus macerans</u> (IFO-3490, IAM-1227), <u>Bacillus circulans</u> (ATCC 6], ATCC 9966), alkalophilic Bacillus sp. (BIKOKEN No. 614 and 612) and <u>Bacillus megaterium</u> (FERM-P No. 935). Working condition may be suitably determined depending on the optimum pH and the optimum temperature for a specific enzyme.

The starch hydrolyzate solution containing cyclodextrins thus obtained or a filtrate prepared by removing crystalline β-cyclodextrin from the hydrolyzate solution are then reacted with a saccharogenic enzyme to obtain a sugar solution containing cyclodextrins and reducing sugars such as glucose and maltose. The saccharogenic enzyme used may be suitably selected depending on the intended product. If the product in which α-, β- and γ-cyclodextrins coexist is intended, such a saccharogenic enzyme, that hydrolyzes straight or branched chain dextrins to convert them into reducing sugars such as glucose and maltose but does not substantially hydrolyze any of α-, β- and γ-cyclodextrins, is used to obtain a sugar solution containing α-, β- and γ-cyclodextrains and reducing sugars. Examples of such saccharogenic enzyme include glucoamylase, β-amylase and combination of either of them and α-1,6-glucosidase.

Glucoamylase or α-1,6-glycosidase combined with gluco- amylase hydrolyze straight or branched chain dextrins to convert them into glucose. β-Amylase or α-1,6- glucosidase combined with β-amylase convert the dextrins into maltose. On the other hand, if α- cyclodextrin is intended, a saccharogenic enzyme which can not substantially hydrolyze α-cyclodextrin but can hydrolyze cyclodextrins such as β- and Υ-cyclodextrins and the remaining acyclic dextrins to convert them into reducing sugars such as glucose and maltose, is used. Examples of such saccharogenic enzyme include bacterial saccharogenic α-amylase, fungal α-amylase and gluco- amylase combined with these α-amylases. Bacterial sac- charogenic α-amylase or fungal α-amylase convert the starch hydrolyzate other than α-cyclodextrin into mainly glucose and maltose. Glucoamylase combined with bacterial saccharogenic α-amylase converts the starch hydrolyzate into glucose. Reducing sugars contained in the sugar solution is preferably converted into glucose in the light of efficiency of a succeeding separation step in the processes of the third and the fourth embodiments of the present invention.

In the third and the fourth embodiments of the present invention, the resulting sugar solution containing cyclodextrins and reducing sugars as primary ingredients is passed through the column packed with strongly acidic cation exchange resin to fractionate cyclodextrins from the sugar solution. Various strongly acidic cation exchange resins are commercially available and may be used. Typically, alkali or alkali earth metal salts of strongly acidic cation exchange resin may be used which comprise cross-linked styrene-divinylbenzene copolymer having sulfonyl groups. Examples of commercially available resin include DIAION-SK series such as IB, IAG, 100, 102, 104, 106, 110, 112 and 116 (Mitsubishi Chemical Ind. Ltd. JAPAN), AMBERLITE-IR-series such as 120B, 12T, 116, 118, 122 and 124 (Rohm & Haas Co. USA) and DOWEX-50W (Dow Chemical Co.). The smaller the particle size of resin, the better is the separation of cyclodextrins from reducing sugars. Too fine particles results in an increase in water pressure loss while passing a solution through the column packed with such resin. Accordingly, the particle size is in the range of 0,074 to 0,84 mm preferably 0,149 to 0,59 mm. A higher temperature at which fractionation is performed leads to a good separation, however, the temperature is preferably in the range of 50 to $80^{\circ}$C in consideration of sugar decomposition or resin life. Below $50^{\circ}$C, the efficiency of separation is not satisfactory and an undesirable infection of microorganism may occur and above $80^{\circ}$C, sugar decomposition may occur and the resin life becomes short.

A pH of a sugar solution to be passed through may be in the range of 3 to 6 which a typical sugar solution shows. A concentration of the sugar solution is less than 60%, preferably in the range of 20 to 50%. The sugar solution is passed through the column from the top at a space velocity (SV) of 0.1 to 1.0  The effluent, that is, 50 to 80°C water is then passed
through the column to perform the fractionation.  It
is noted that water having an ambient temperature
may be used as the effluent because such water can be
heated to the desired temperature due to the heated
column which is typically kept at about 60°C.  The
process by which a liquid is passed through the column
is suitably selected from, for example, fixed bed,
moving bed or false moving bed processes.

The following illustrates an example of the
fractional chromatography by which cyclodextrins are
separated from reducing sugars according to the third
embodiments of the present invention.  The 15 ml of sugar
solution containing 23.5% of solid (which consists of
2.8% of α-cyclodextrin, 7.1% of β-cyclodextrin, 11.2% of
γ-cyclodextrin, 77.4% of glucose and 1.5% of oligosaccharides) was fed to a column having an internal diameter of
2.6 cm and a height of 70 cm and packed with 320 ml of
strongly acidic cation exchange resin (DIAION-SK-IBS, Na
type) after which, the eluting water of 60°C was passed
through the column at SV = 0.45.  The effluent liquid
was collected in succesive fractions of 5 g, each of
which were then analyzed.  This is illustrated graphically in Figure 3 wherein cyclodextrins and reducing sugars
fractions are represented by A and B, respectively and
the two fractions are advantageously separated.  According to the processes of the  third and the fourth embodiments of the present invention as mentioned above, high pure cyclodextrins can be obtained and further, reducing sugars can be easily eluted so that feeding the sugar solution and succeeding elution with water can continuously be repeated, which leads to the production of cyclodextrins in a high efficiency.

Finally, the process of the fifth embodiment of the present invention will be described.

According to the process, the cyclodextrins fraction obtained by the process of the third embodiment as mentioned above and containing α-, β- and γ-cyclodextrins is subjected to the gel filtration to separate and collect γ-cyclodextrin in a high yield. This process comprises the following three steps. The first step of this process is one in which a sugar solution containing α-, β- and γ-cyclodextrins and glucose as primary ingredients is prepared. The sugar solution may be obtained by, for example, the following process. A suspension containing 2 to 40% of starch is heated with stirring to obtain a gelatinized starch solution or the suspension is reacted with a liquefying enzyme to obtain a liquefied starch solution, into which CGTase is added to convert the gelatinized or liquefied starch into starch hydrolyzate containing α-, β- and γ-cyclodextrins and acyclic dextrins. The starch hydrolyzate is heated to inactivate the enzyme and then is reacted with glycoamylase having poor, if any, α-amylase activity, to obtain the sugar solution containing α-, β- and γ-cyclodextrins and glucose as primary ingredients. In this first step, unhydrolyzed acyclic dextrins contained in the starch hydrolyzate solution are reacted with an enzyme to convert the acyclic dextrins into glucose, in order to effectively perform the fractional processes in the succeeding second and third steps. For this purpose, glucoamylase having poor, if any, α-amylase activity is required to be reacted, for the reason that: it has been found that γ-cyclodextrin is easily hydrolyzed with α-amylase, especially saccharogenic α-amylase, so that commercially available glucoamylase having α-amylase activity would hydrolyze γ-cyclodextrin, which results in low yield of the final product. Examples of CGTase include known enzymes obtained from microorganisms belonging to Bacillus sp. such as Bacillus macerans, Bacillus circulans and alkalophilic bacteria. Working conditions of CGTase may be suitably determined depending on optimum pH (typically 4.5 to 8.5) and optimum temperature (typically 50 to 75°C). Examples of glucoamylase having poor, if any, α-amylase activity include commercially available pure glucoamylase or purified glucoamylase commercially available (see, for example, S. Suzuki and M. Nakamura, "DENPUN-KAGAKU"(Starch Science) Handbook, Asakura Shoten, pp. 267 to 271, 1977).

Working conditions of glucoamylase is such ones under which glucose is typically produced from starch, that is, glucoamylase is used in the amount of about 1 to 5 IU per 1 g of solid and is reacted at a temperature of about 50 to 60$^o$C and at pH of about 4.0 to 5.5, for about 10 to 50 hours.

Next, in the second step of this process, the sugar solution prepared in the preceding first step and containing α-, β- and γ-cyclodextrins and glucose as primary ingredients is passed through the column packed with strongly acidic cation exchange resin to separate and collect α-, β- and γ-cyclodextrins fraction from the sugar solution. Examples of strongly acidic cation exchange resin include alkali or alkali earth metal salts of cross-linked styrene-divinylbenzene copolymer having sulfonyl groups. Examples of commercially available resin include DIAION-SK-series such as IB, IAG, 100, 102, 104, 106, 110, 112 and 116, AMBERLITE-IR-series such as 120B, 12T, 116, 118, 122 and 124, and DOWEX-50W. The smaller the particle size of resin, the better is the separation of cyclodextrins from reducing sugars. However, in consideration of water pressure loss while passing a liquid through the column packed with such resin, the particle size is in the range of 0,074 to 0,84, preferably 0,149 to 0,59 mm. A higher temperature at which fractionation is performed leads to a good separation, however, the temperature is preferably in the range of 50 to 80$^o$C in consideration of sugar decomposition or resin life. Below 50$^o$C, the efficiency of separation is not satisfactory and an undesirable infection of microorganism may occur and above 80$^o$C,

- 24 -

sugar decomposition may occur and the resin life is short. A pH of a sugar solution to be passed through may be in the range of 3 to 6 which a typical sugar solution shows. A concentration of the sugar solution is less than 60%, preferably in the range of 20 to 50%. The sugar solution or the effluent are passed through the column at a space velocity (SV) of 0.1 to 1.0. The process by which a liquid is passed through the column is suitably selected from those such as fixed bed, moving bed and false moving bed processes.

As mentioned above, this second step is substantially same as the process of the third embodiment of the present invention. An amount of $\gamma$-cyclodextrin contained in the cyclodextrins fraction obtained by the second step, that is, the process of the third embodiment exemplified above, is 51.8% of the total solid. According to this second step, a great amount of glucose fraction can be separated so that high pure cyclodextrins can be collected and further, $\gamma$-cyclodextrin contained in the cyclodextrins fraction can be increased, which leads to a high efficiency of separation in the succeeding gel chromatography process of the third step.

Finally, according to the third step, the cyclodextrins fraction obtained in the preceding second step is subjected to a gel chromatography to separate $\gamma$-cyclodextrin. For this purpose, all the cyclodextrins fractions are collected and concentrated to a concentration of 20 to 50%. With or without removing $\beta$-cyclo-

dextrin crystallized out, the resulting solution is fed to the column packed with gel resin particles and then water is passed through the column to fractionate and elute $\gamma$-cyclodextrin. Alternatively, the sugar solution containing cyclodextrins and glucose as primary ingredients obtained in the first step may be passed through the column in which the two columns to be used in the second and the third steps are connected in series, to fractionate and elute $\gamma$-cyclodextrin. In the latter process, removal of glucose fraction between the second and the third steps results in a high separation efficiency in the third step. Examples of gel resin particles used in the third step include Bio-gel P-2, P-4 and P-6 (Bio-Rad Labs.Co.), Sephadex G-10, G-15 and G-25 (Pharmacia Co.) and Toyopearl EW-35, HW-40 and HW-50 (Toyosoda Co., Ltd.), all of which are commercially available. The following illustrates conditions under which gel filtration is performed: a specific velocity (SV) is in the range of 0.05 to 0.5, a temperature is in the range of 20 to 80°C, a concentration of a sugar solution to be treated is in the range of 10 to 50%, and volume of a sugar solution to be fed into the column in each operation is in the range of about 1 to 10% of apparent volume of packed gel resin particles. The following illustrates an example of the third step in which $\gamma$-cyclodextrin is separated from cyclodextrins fraction. The 10 ml of cyclodextrins fraction obtained in the preceding second step having concentration of 29.4% of solid (which consists of 16.1% of α-cyclodextrin, 22.0% of β-cyclodextrin, 52.2% of γ-cyclodextrin and 9.7% of oligosaccharides) was fed to a column having an internal diameter of 2.6 cm and a height of 70 cm and packed with 370 ml of gel resin particles (Toyopearl HW-40S)after which the eluting water of 60°C was passed through the column at SV = 0.22. The effluent liquid was collected in successive fractions of 5 g, each of which was then analyzed. This is illustrated graphically in Figure 4 wherein each fractions of oligosaccharides, γ-cyclodextrin and a mixture of α- and β-cyclodextrins are represented by C, D and E, respectively. γ-Cyclodextrin obtained from the fraction D has a purity of 93.2% determined by liquid chromatography method. Thus, the cyclodextrins fraction obtained in the second step can be fractionated by the gel chromatography to separate γ-cyclodextrin fraction from α- and β-cyclodextrins fraction in a high efficiency.

As mentioned above, the object of the process of the fifth embodiment can be performed by the process consisting of the three steps, that is, the first step comprising preparing a sugar solution containing α- β- and γ-cyclodextrins and glucose as primary ingredients, the second one comprising fractionating the sugar solution to give each fractions of α-, β- and γ-cyclodextrins and glucose and, the third one comprising separating γ-cyclodextrin fraction from the α-, β- and γ-cyclodextrins fraction. For example, a lack of the first step leads to a trouble in operation to separate cyclodextrins fraction and, a lack of the second step results in need of an unreasonable large column and a great amount of gel resin particles used in the fractionation in the third step, which will lead this process uneconomical so that it will be impossible to practice the process on an industrial scale.

The present invention will now be described with reference to the following Examples.

Examples 1 and 2 illustrate the second and the first embodiment of the present invention.

Reference Example

15 L. of potato starch solution (4% (w/v), starch content: 600 grams) was adjusted to pH 9.0 with NaOH and was homogeneously gelatinized at a temperature of $125^{o}$C for 30 minutes. After cooling the gelatinized starch solution to $60^{o}$C, 600 mg of the enzyme produced by $\underline{Bacillus\ sp}$. No. 38-2 (BIKOKEN No. 614, ATCC 21783) (30,000 units/g and produced by Meito Sangyo Co., Ltd.) was added to the gelatinized starch solution, which was reacted at $60^{o}$C for 30 hours. After the completion of the reaction, the reaction mixture was heated at $100^{o}$C for 5 minutes to inactivate the enzyme, and thereafter cooled to $55^{o}$C and adjusted to pH 5.0 with hydrochloric acid. 900 Mg of glucoamylase (2,000 units/gram , the product (GAS-1) of Amano Pharm. Co., Ltd.) were added to the mixture and reaction was allowed to continue for 20 hours. The reaction mixture was decolorized with

0117997

activated carbon, filtered, deionized and concentrated to 50% by weight solids content. 500 Mg of β-cyclodextrin were then added to the concentrate as seed material and the mixture was allowed to stand overnight in a cold chamber. The resulting precipitated β-cyclodextrin was removed by filtration to obtain a filtrate containing cyclodextrins with a much reduced content of β-cyclodextrin.

Example 1

The filtrate obtained in Reference Example (Bx 30.0, d = 1.12, 387 ml, 130 g of solids, containing α : 2.5%, β : 6.8% and γ : 10.7% by weight) was fed to a column packed with 500 ml of DIAION-HP-20, at a rate of SV = 0.5 at $40^{o}C$, and then water was passed through the column to wash out the non-adsorbed substances. The column was then raised to $85^{o}C$ and adsorbed material thereon was eluted with 500 ml of water, a fraction containing β-cyclodextrin mixed with a small amount of γ-cyclodextrin (13.5 g of the solids content) was obtained. The column was then raised to $97^{o}C$ and adsorbed material thereon was eluted with 500 ml of water. The eluate was concentrated and 30 ml of 25% solution was obtained (see Figure 2). The resulting solution was then de-colourized, deionized, and concentrated to Bx 72. A small amount of seed material was added to the concentrate and the mixture was allowed to stand overnight at $4^{o}C$ while stirring. The resulting crystalline γ-cyclodextrin was filtered and dried at $60^{o}C$ for 12 hours in vacuum dryer. 10.5 Grams of crystalline powder was obtained. The yield was 75.5% based on ɣ-cyclodextrin contained in the sugar solution originally passed through the column. A purity of ɣ-cyclodextrin thus obtained was analyzed by high performance liquid chromatography and was 99.2%.

Example 2

Reference Example was repeated except that 900 mg of bacterial liquefying α-amylase (10,000 units/g the product of Daiwa Kasei Ind. Co., Ltd.) was substituted for glucoamylase. A sugar solution containing cyclodextrins (α: 2.5%, β: 6.8%, ɣ:10.7%) was obtained. Glucoamylase (Sumizyme 2000, the product of Shin Nippon Kagaku Co., Ltd., 2000 units/g) was added to the sugar solution in an amount of 0.05% by weight of the solids and the mixture was reacted at pH 5.5. overnight at 50°C. The reaction mixture was then heated at 120°C for 15 minutes to inactivate the enzyme, decolorized and deionized.

The resulting solution (Bx 28.5, d = 1.11, 1.26 liter, 400 g of solids) was fed to a column packed with 3 liter of DIAION-HP-50 at a rate of SV=1 at 75°C by ascending method and then water was passed through the column by descending method to wash out the non-adsorbed substances.

The column was then raised to 97°C and adsorbed material thereon was eluted with 10 liter of water at SV=1. The eluate was concentrated and 140 ml of 28% solution (39.2 g of the solids content) was obtained (see Figure 1). The solution was then decolorized, deionized and concentrated to Bx 68. A small amount of seed material was added to the concentrate and the mixture was allowed to stand overnight at 4°C while stirring. The resulting crystalline γ-cyclodextrin was filtered and dried at 60°C for 24 hours in a vacuum dryer. 31 Grams of crystalline powder was obtained. The yield was 72.4% based on γ-cyclodextrin contained in the sugar solution first passed through the column. A purity of γ-cyclodextrin thus obtained was analyzed by high performance liquid chromatography and was 99.6%.

The following Example 3 illustrates the third embodiment of the present invention and Examples 4 and 5 illustrate the fourth embodiment of the present invention.

Example 3

240 Grams of potato starch was suspended in 1.4 liter of water. To the suspension, 8 mg of calcium chloride and CGTase produced by alkalophilic, Bacillus sp. No. 38-2 (ATCC 21783,BIKOKEN No. 614) in an amount of 50 units per one gram of starch were added and the mixture was heated at 80°C for 30 minutes and was liquefied. The liquefied starch was then heated at 120°C for 10 minutes in an autoclave to inactivate the enzyme. After cooling the resulting liquefied solution, the CGTase mentioned above was added to the solution in an amount of 100 units per one gram of starch and the mixture was reacted at pH 7.5 for 40 hours at 65°C. The resulting solution was heated to inactivate the enzyme and then, glucoamylase (3,400 IU/g) produced by Rhizopus niveus was added to the solution in an amount of 0.1% by weight of the solids content and the mixture was reacted at pH 5.0 for 30 hours at 55°C. The reaction mixture was purified by the conventional method and concentrated, 45 g of crystalline β-cyclodextrin was removed and 445 g of 42% sugar solution containing glucose and cyclodextrins as primary ingredients was obtained. The solids of the sugar solution consists of 77.5% of glucose, 1.5% of oligosaccharides and 21% of cyclodextrins (α : β : γ = 2.8 : 7.1 : 11.2).

38 Grams of the resulting sugar solution was fed to a column having an internal diameter of 2.5 cm and a height of 120 cm and packed with 500 ml of strongly acidic cation exchange resin (DIAION-SK-1BS, Na type) at SV = 0.28 at 60°C and then water was passed through the column. Fractions of 69 g of 4.7% cyclodextrins solution and 165 g of 7.5% glucose solution were obtained. The cyclodextrins fraction was concentrated to dryness to obtain 3.1 g of a mixed powder of α-, β- and γ-cyclodextrins. The yield of cyclodextrins was 92.5% and a purity thereof was 98.5%.

Example 4

120 Grams of potato starch was suspended in 2 liter of water and 10 mg of calcium chloride was added to the suspension. The reaction mixture was heated at 120°C for 30 minutes in an autoclave to obtain a gelatinized starch solution. CGTase produced by Bacillus macerans (IFO 3490) was added to the resulting gelatinized solution in an amount of 150 units per one gram of starch and the mixture was reacted at pH 6.0 for 40 hours at 40°C. The resulting solution was heated to inactivate the enzyme. Glucoamylase (3,400 IU/g) produced by Rhizopus niveus and bacterial saccharogenic α-amylase (10,000 U/g) were added to the solution in an amount of 0.1% and 0.2% by weight of the solids content, respectively and the mixture was reacted at pH 5.0 for 30 hours at 40°C. The reaction mixture was then purified and concentrated, 28% sugar solution containing α-cyclodextrin and glucose as primary ingredients was obtained. The solids of the sugar solution consists of 74.2% of glucose, 24.3% of α-cyclodextrin and 1.5% of oligosaccharides. 50 Grams of the resulting sugar solution was fed to a column having an internal diameter of 2.5 cm and a height of 120 cm and packed with 500 ml of strongly acidic cation exchange resin (AMBERLITE-CG-120I, Na type, the product of Rohm and Hass Co., Ltd.) at SV = 0.45 at 60°C and then, water passed through the column. Fractions of 75 g of 4.3% α-cyclodextrin solution and 131 g of 8% glucose solution were obtained. The α-cyclodextrin fraction was concentrated and α-cyclodextrin was crystallized, filtered and dried, 2.2 g of crystalline α-cyclodextrin was obtained. A purity of the product was 99.8%.

0117997

Example 5

The sugar solution obtained in Example 4 and containing α-cyclodextrin and glucose as primary ingredients was adjusted to a concentration of 30%. 45 Grams of the resulting sugar solution was fed to a column having an internal diameter of 2.2 cm and a height of 150 cm and packed with 500 ml of strongly acidic cation exchange resin (DIAION-SK-1BS, Ca type) at SV = 0.6 at 60°C and then, fractionation was performed according to the procedure as described in Example 4, 55 g of 5.5% α-cyclodextrin solution was obtained. The yield and purity of the product were 92.2% and 97.8%, respectively.

The following Examples 6 and 7 illustrate the fifth embodiment of the present invention.

Example 6

350 Grams of potato starch was suspended in 2.0 liter of water. To the suspension, 12 mg of calcium chloride and CGTase produced by alkalophilic, Bacillus sp. No. 38-2 (ATCC 21783, BIKOKEN No. 614) in an amount of 50 units per one gram of starch were added and the mixture was heated at 80°C for 30 minutes and was liquefied. The liquefied starch solution was then heated at 120°C for 10 minutes in an autoclave to inactivate the enzyme. After cooling the resulting liquefied solution, the CGTase mentioned above was added to the solution in an amount of 100 units per one gram of starch and the mixture was reacted at pH 7.5 for 40 hours at 65°C. The resulting solution was heated to inactivate the enzyme and then purified glucoamylase (the product of SEIKAGAKU KOGYO Co., Ltd, 3,400 IU) was added to the solution in an amount of 0.1% by weight of the solids content and the mixture was reacted at pH 5.0 for 30 hours at $55^{\circ}$C. The reaction mixture was then purified by the conventional method and concentrated, 62 g of crystalline $\beta$-cyclodextrin was removed by filtration and 545 g of 40% sugar solution containing glucose and cyclodextrins as primary ingredients was obtained. The solids of the sugar solution consists of 78.2% of glucose, 1.4% of oligosaccharides and 20.4% of cyclodextrins ($\alpha$ : $\beta$ : $\gamma$ = 2.4 : 7.6 : 10.4).

35 Ml of the resulting sugar solution was fed to a column having an internal diameter of 2.4 cm and a height of 120 cm and packed with 500 ml of strongly acidic cation exchange resin (DIAION-SK-IBS, Na type) at SV=0.26 at $60^{\circ}$C and then, water was passed through the column. Fractions of 65 g of 4.2% cyclodextrins solution and 146 g of 7.3% glucose solution were obtained. Concentration of $\gamma$-cyclodextrin in the cyclodextrins solution was 50.5%. The cyclodextrins fraction was concentrated to a concentration of 22.2% and 100 ml of the concentrate was fed to a column having an internal diameter of 2.4 cm and a height of 90 cm and packed with 380 ml of gel resin particles (Toyopearl HW-40S) at SV = 0.24 at $60^{\circ}$C and then, water was passed through the column. All the $\gamma$-cyclodextrin fractions were collected and 33 g of 3.2% sugar solution was obtained. A content of $\gamma$-cyclodextrin in the

sugar solids was analyzed by high performance liquid chromatography and it was 92.8%. The sugar solution containing γ-cyclodextrin was concentrated to a concentration of 50% and γ-cyclodextrin was crystallized out. 0.5 Gram of γ-cyclodextrin was obtained. The purity was 99.8%.

Example 7

The same column packed with the same strongly acidic cation exchange resin as used in Example 6 was connected in series with the same one packed with the same gel resin particles as used in Example 6. To the connected column, 30 ml of 40% sugar solution obtained in the first step of Example 6 and containing glucose and cyclodextrins as primary ingredients was fed at SV = 0.22 at 60°C and then, water was passed through the column. Thus, the separation processes of the second and the third steps between which glucose fractions was removed were successively performed. All fractions of γ-cyclodextrin were collected and 32 g of 3.0% sugar solution was obtained. A content of γ-cyclodextrin in the sugar solids was 93.2%. The sugar solution was concentrated to yield 0.4 g of crystalline γ-cyclodextrin having a purity of 99.9%.

Comparative Example

Example 6 was repeated except that liquefying α-amylase was substituted for purified glucoamylase. Cyclodextrins fraction could not be separated from oligosaccharides fraction at all, so that separation by gel chromatography in the third step was not successful.

On the other hand, the sugar solution obtained
in the first step of Example 6 was directly subjected
to the gel chromatography in the third step.  A peak
defined as the $\gamma$-cyclodextrin fraction was not obtained,
so that $\gamma$-cyclodextrin could not be separated and ob-
tained.

1.    A process for the production of cyclodextrins, which comprises passing a sugar solution containing cyclodextrins and reducing sugars as primary ingredients through a column packed with alkali or alkali earth metal salts of strongly acidic cation exchange resin and then, eluting the adsorbed cyclodextrins with water to fractionate and collect them.

2.    A process according to claim 1 , wherein the sugar solution contains cyclodextrins and reducing sugars and has been obtained by reacting a starch hydrolyzate solution produced by reacting gelatinized or liquefied starch with cyclodextrin glycosyltransferase or a said starch hydrolyzate solution from which β-cyclodextrin has been removed by filtration with a saccharogenic enzyme having poor, if any, hydrolytic action on cyclodextrins in contradistinction to acyclic dextrins.

3.    A process according to claim 2, wherein cyclodextrins substantially consists of α-cyclodextrin.

4.      A process according to claim 3 , wherein the sugar solution contains α-cyclodextrin and reducing sugars and has been obtained by reacting a starch hydrolyzate solution produced by reacting gelatinized or liquefied starch with cyclodextrin glycosyltransferase or a said starch hydrolyzate solution from which β-cyclodextrin has been removed by filtration with a saccharogenic enzyme having poor, if any, hydrolytic action on α-cyclodextrin in contradistrinction to other cyclodextrins and acyclic dextrins.

5.      A process according to claim 2, wherein the saccharogenic enzyme is selected from the group consisting of glucoamylase, β-amylase, α-1, 6-glucosidase and a mixture of more than one thereof.

6.      A process according to claim 4 , wherein the saccharogenic enzyme is selected from the group consisting of bacterial  saccharogenic α-amylase, fungal α-amylase and a mixture of more than one thereof and glucoamylase.

40

0117997

7.     A process according to any one of claims 1 to 13, wherein strongly acidic cation exchange resin is a cross-linked styrene-divinylbenzene copolymer having sulfonyl groups.

8.     A process for the production of γ-cyclodextrin, which comprises the steps:

preparing a sugar solution containing glucose and α-, β- and γ-cyclodextrins as primary ingredients by reacting glucoamylase having poor if any α-amylase activity with a starch hydrolyzate containing cyclodextrins produced by reacting gelatinized or liquefied starch with cyclodextrin glycosyltransferase;

passing the sugar solution through a column packed with alkali or alkali earth metal salts of strongly acidic cation exchange resin to separate α-, β- and γ-cyclodextrins fraction from glucose fraction; and

passing the α-, β- and γ-cyclodextrins fraction through a column packed with gel resin particles to separate and collect γ-cyclodextrin.

9.     A process according to claim 8., wherein strongly acidic cation exchange resin is a cross-linked styrene-divinylbenzene copolymer having sulfonyl groups.

FIG. 1

0117997

FIG.2

- 43 -

# FIG.3

# FIG.4

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | JOURNAL OF CHROMATOGRAPHY, vol. 189, no. 1, February 5, 1980, pages 98-100, Amsterdam, NL H. HOKSE: "Analysis of cyclodextrins by high-performance liquid chromatography" * Page 98: "EXPERIMENTAL" * | 1-9 | C 08 B 37/16 C 12 P 19/18 |
| P,X | FR-A-2 457 900 (RIKAGAKU KENKYUSHO) * Whole document * | 1-7 | |
| P,X | DIE STÄRKE, vol. 33, no. 7, July 1981, pages 244-246, Weinheim, DE M. YAMAMOTO et al.: "Isolation and purification of alpha-cyclodextrin by synthetic adsorption polymer" * Whole document * | 1-7 | TECHNICAL FIELDS SEARCHED (Int. Cl. 3) |
| A | US-A-4 022 637 (ROBERT F. SUTTHOFF) * Table I * | | C 08 B |

The present search report has been drawn up for all claims

| Place of search THE HAGUE | Date of completion of the search 24-05-1984 | Examiner LENSEN H.W.M. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82